# EUROPEAN PATENT SPECIFICATION

(11) **EP 1 332 899 B1**
(45) Date of publication and mention of the grant of the patent: **03.08.2005**
(21) Application number: 02027019.5
(22) Date of filing: 03.12.2002
(51) Int. Cl.: B60H 1/26, B60H 1/34

(54) **Ventilation louver, particular for motor vehicles**
Lüftungsgitter, insbesondere für Kraftfahrzeuge
Grille de ventilation, en particulier pour véhicules automobiles

(30) Priority: 31.01.2002 IT PN20020005 U
(43) Date of publication of application: 06.08.2003
(73) Proprietor: Plastal S.p.A., 33170 Pordenone (IT)
(72) Inventor: Meneghin, Elvio, 31015 Conegliano , Treviso (IT); Zaffalon, Oliviero, 31030 Breda di Piave, Trevisio (IT)
(74) Representative: Giugni, Valter

(56) References cited:
- EP-A- 0 936 091
- US-A- 5 823 869
- US-B1- 6 342 003

## Description

The present invention refers to an improved ventilation louver, particularly suited for use in motor vehicles.

Ventilation louvers of the above cited kind are largely known to be normally made of rigid plastic material and/or metal and mainly comprise a peripheral frame that delimitates an end portion of at least a conduit for the passage of air into the interior of the vehicle. The flow of air along the conduit can be adjusted by means of a butterfly valve or similar device. Furthermore, such a frame may be arranged in an adjustable, i.e. orientatable manner in the passenger compartment of the vehicle and/or may be associated to slat-like baffle plates provided in a mutually parallel arrangement and capable of being orientated so as to adjust the direction of the air flow according to the requirements.

On the other hand, the flow of air issuing from the ventilation louver is substantially concentrated about a main directional axis that is defined by the orientation of the baffle plates, so that it may prove scarcely effective and be much of a nuisance for the people in the vehicle. US 6,342,003 discloses a ventilation louver in which a set of spinning blades produces the air-conditioning flow. However, the body containing the blades is fixed to the air-conditioning outlet of automobile by means of a clipper, so as the device cannot give an effective ventilation effect.

It therefore is a main purpose of the present invention to provide a ventilation louver, in particular for use in motor vehicles, which is particularly simple in its structure and construction, and at the same time enable an effective ventilation effect to be obtained without causing any inconvenience to people.

A further purpose of the present invention is to provide a ventilation louver of the above cited kind, with which ventilation is capable of being adjusted in a particularly easy, convenient and smooth manner.

According to the present invention, these aims are reached in a ventilation louver, in particular for motor vehicles, embodying the characteristics as recited in the appended claims.

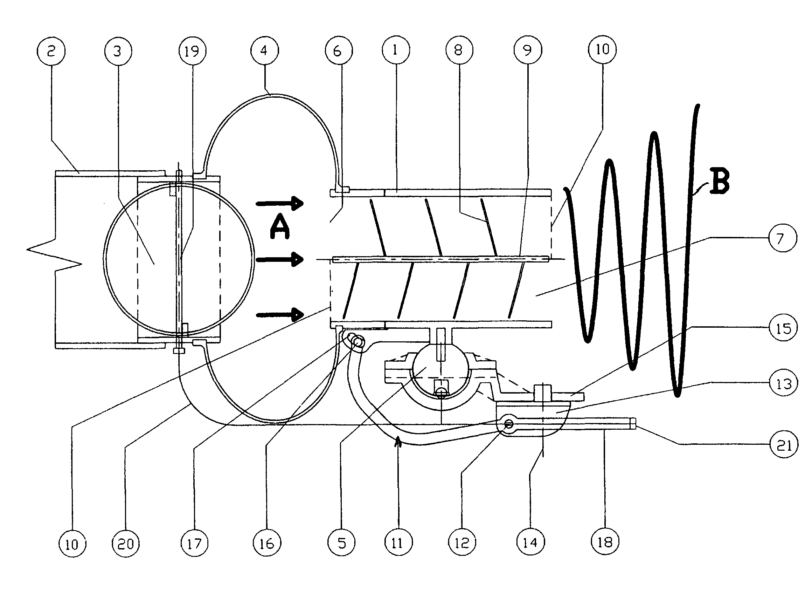

The features and advantages of the present invention will anyway be more readily and clearly understood from the description that is given below by way of non-limiting example with reference to the accompanying drawing, in which the Figure is a schematic, longitudinal cross-sectional view of a preferred embodiment of the present invention.

With reference to the Figure, the ventilation louver mainly comprises a tubular, preferably cylindrical frame 1 that, when duly installed in the vehicle, delimitates the end portion of at least a conduit for the passage of air, in particular into the interior of a motor vehicle.

Said air conduit is preferably provided with means for adjusting the flow rate of the air, such as for instance a butterfly valve 3, and comprises, upstream of the frame 1, an inlet conduit 2 that is connected to an inlet opening 6 of the frame 1 vie a sleeve-like flexible portion 4, or the like.

The frame 1, which has an outlet opening 7 on the opposite side, is mounted in an adjustable, i.e. orientatable manner in the passenger compartment of the vehicle, preferably by means of a ball joint 5 connected to a support member 15.

In its interior, the frame 1 accommodates at least a substantially helical and substantially co-axial member. Preferably, such a helical member comprises a helical screw 8 adapted to freely rotate about a shaft 9 of its own that is mounted co-axially inside the frame 1, for instance by means of appropriate support spokes 10.

Preferably, the helical screw 8 extends substantially all over the axial length of the frame 1 and has a diameter that is just slightly smaller than the inside diameter of the frame itself, in such a manner as to enhance the operating effectiveness of the ventilation louver.

In any case, the helical screw 8 is caused to rotate about the shaft 9 by the substantially axial flow of air (indicated at A in the Figure) which enters the inlet opening 6, and converts said axial flow into a corresponding helical flow issuing from the outlet opening 7 of the louver in the form of a whirling, substantially divergent flow of air (indicated at B in the Figure).

The rotation of the helical screw 8 does not substantially alter the air flow and, in any case, the air flow B occurring at the outlet opening 7 of the louver is particularly effective in ensuring a good ventilation of the vehicle (thanks to its whirling motion). Furthermore, in an advantageous manner, the diverging (rather than axially concentrated) conformation of the flow of air issuing from the outlet opening does not create any inconvenience to the people in the vehicle.

It will of course be appreciated that the helical screw 8 may also be mounted in a fixed manner and/or may be replaced by equivalent spiral or helical means, such as for instance turbine blades or vanes, or the like, adapted to give the air a flow pattern as described above for the outlet flow B.

Preferably, the frame 1 (and, therefore, the middle axis of the whirling outlet flow B) can be adjusted, i.e. orientated manually in a particularly convenient manner by means of an articulated control system of the so-called joystick type. Such an articulated control system mainly comprises an appropriately shaped lever 11 which has its fulcrum at 12 on a linking member 13 that is in turn hinged on to the support member 15 so as to be able to pivot about an axis 14 that is orthogonal to the fulcrum 12. An end portion 16 of the lever 11 is associated in an articulated, i.e. loose manner to the frame 1, for instance by means of a slot 17, or the like, whereas the opposite end portion 18 can be gripped with the hand to orientate the frame 1.

The flow adjusting valve 3 is of the type capable of rotating about a transverse spindle 19. According to another aspect of the invention, said spindle 19 is connected axially to a flexible drive cable 20 which is in turn capable of being rotated by means of a small control wheel 21, or the like, pivoted on the end portion 18 of the lever 11. As a result, a single control device comprising the lever 11 enables not only the main direction of the outlet air flow B to be orientated, but also the flow rate of said outlet air flow to be varied through a corresponding adjustment of the valve 3 by a simple rotation of the small wheel 21.

It will of course be appreciated that the above described ventilation louver may be the subject of a number of further modifications or variants without departing from the claims. So, for instance, it is possible for the rotating shaft 9 of the helical screw 8 to be connected to a drive motor (not shown), for example via a flexible-cable drive system similar to the one that has been described above in connection with the adjustment of the valve 3 through the cable 20. This would enable the motor-driven helical screw to not only perform the function of giving a desired pattern to the outlet air flow B issuing from the louver, but also to force the same air flow A along the conduit 2, 4, 1.

## Claims

1. Ventilation louver, in particular for motor vehicles, comprising a tubular frame adapted to delimitate an end portion of at least a conduit for the passage of air supplying said frame with a substantially axial inlet flow, in which at least a portion of said air conduit is flexible, said frame (1) accomodating in its interior at least a substantially helical and substantially co-axial member (8) adapted to convert said inlet axial flow (A) into a corresponding helical outlet air flow that issues from the frame (1) in the form of a whirling, substantially divergent flow of air (B),
**characterized in that** said frame is capable of being orientated manually, with respect to an articulated ball joint (5), by means of an articulated control arrangement comprising a lever (11) which has its fulcrum (12) on a linking member (13) that is in turn hinged on to a support member (15) so as to be able to pivot about an axis (14) that is orthogonal to said fulcrum (12), in which an end portion (16) of the lever (11) is associated in an articulated manner to the tubular frame (1).

2. Ventilation louver according to claim 1, **characterized in that** in said air conduit (2, 4, 1) there is provided at least a flow adjustment member (3) capable of being controlled via a flexible drive cable (20) that is actuatable with the aid of a control device (21) provided in correspondence of said lever (11).

3. Ventilation louver according to claim 2, **characterized in that** said helical screw (8) is adapted to be driven rotatably by driving means, so as to be able to force the flow of air along said conduit (2, 4, 1).

## Patentansprüche

1. Lüftungsgitter insbesondere für Kraftfahrzeuge, das ein röhrenförmiges Gehäuse umfasst, das so eingerichtet ist, dass es einen Endabschnitt wenigstens einer Leitung für das Hindurchtreten von Luft begrenzt, die das Gehäuse mit einem im Wesentlichen axialen Einlassstrom versorgt, wobei wenigstens ein Teil der Luftleitung flexibel ist und das Gehäuse (1) in seinem Inneren wenigstens ein im Wesentlichen spiralförmiges und im Wesentlichen koaxiales Element (8) aufnimmt, das so eingerichtet ist, dass es den Einlass-Axialstrom (A) in einen entsprechenden Spiral-Auslassluftstrom umwandelt, der aus dem Gehäuse (1) in Form eines wirbelnden, im Wesentlichen divergenten Stroms von Luft (B) austritt, **dadurch gekennzeichnet, dass** das Gehäuse in Bezug auf ein bewegliches Kugelgelenk (5) mittels einer Gelenk-Steueranordnung manuell ausgerichtet werden kann, die einen Hebel (11) umfasst, der seinen Drehpunkt (12) an einem Verbindungselement (13) hat, das seinerseits so an einem Trageelement (15) angelenkt ist, dass es um eine Achse (14) geschwenkt werden kann, die rechtwinklig zu dem Drehpunkt (12) ist, wobei ein Endabschnitt (16) des Hebels (11) gelenkig mit dem röhrenförmigen Gehäuse (1) verbunden ist.

2. Lüftungsgitter nach Anspruch 1, **dadurch gekennzeichnet, dass** in der Luftleitung (2, 4, 1) wenigstens ein Stromregulierelement (3) vorhanden ist, das über ein flexibles Steuerseil (20) gesteuert werden kann, das mit Hilfe einer Steuervorrichtung (21) betätigt werden kann, die an dem Hebel (11) vorhanden ist.

3. Lüftungsgitter nach Anspruch 2, **dadurch gekennzeichnet, dass** die Schraubenspindel (8) so eingerichtet ist, dass sie von einer Antriebseinrichtung drehend angetrieben wird, so dass sie den Luftstrom durch die Leitung (2, 4, 1) drücken kann.

## Revendications

1. Grille de ventilation, notamment pour véhicules motorisés, comprenant un châssis tubulaire adapté pour délimiter une partie d'extrémité d'au moins un conduit pour le passage de l'air alimentant ledit châssis en un flux d'admission sensiblement axial, dans laquelle au moins une partie dudit conduit d'air est flexible, ledit châssis (1) logeant dans sa partie intérieure au moins un élément sensiblement hélicoïdal et sensiblement co-axial (8) adapté pour convertir ledit flux axial d'admission (A) en un flux d'air de sortie hélicoïdal correspondant qui sort du châssis (1) sous forme d'un flux d'air (B) tourbillonnant, sensiblement divergent, **caractérisée en ce que** ledit châssis est capable d'être orienté manuellement, par rapport à une articulation sphérique (5), au moyen d'un dispositif de commande articulé comprenant un levier (11) dont le point d'appui (12) se situe sur un élément de liaison (13) qui est articulé à son tour sur un élément de support (15) de manière à être capable de pivoter autour d'un axe (14) qui est perpendiculaire audit point d'appui (12), dans lequel une partie d'extrémité (16) du levier (11) est associée d'une manière articulée au châssis tubulaire (1).

2. Grille de ventilation selon la revendication 1, **caractérisée en ce que**, dans ledit conduit d'air (2, 4, 1), il est prévu au moins un élément de réglage de flux (3) capable d'être commandé via un câble de commande (20) flexible qui peut être actionné à l'aide d'un dispositif de commande (21) prévu en correspondance avec ledit levier (11).

3. Grille de ventilation selon la revendication 2, **caractérisée en ce que** ladite vis hélicoidale (8) est adaptée pour être entraînée d'une manière permettant la rotation par des moyens d'entraînement, de manière à être capable de pousser le flux d'air le long dudit conduit (2, 4, 1).
